# EUROPÄISCHE PATENTANMELDUNG

(11) **EP 0 616 144 A1**
(43) Veröffentlichungstag der Anmeldung: **21.09.1994**
(21) Anmeldenummer: 94103387.0
(22) Anmeldetag: 07.03.1994
(51) Int. Cl.: F16D 66/02, G01B 7/06

(54) **Sensorelement für einen mehrstufigen Verschleissgeber, insbesondere für Bremsbeläge**

(30) Priorität: 16.03.1993 DE 4308272
(71) Anmelder: VDO Adolf Schindling AG, D-60326 Frankfurt/Main (DE)
(72) Erfinder: Hanke, Klaus-Dieter, Dipl.-Ing., D-78048 Villingen-Schwenningen (DE); Kastler, Ernst, D-78073 Bad Dürrheim (DE)

(57) **Zusammenfassung**

Es wird ein Sensorelement zur Verschleißermittlung vorgeschlagen, welches einen hohen Grad an Funktionssicherheit bietet und unter Großserienbedingungen gut reproduzierbar herstellbar ist. Das Sensorelement (1) besteht aus einem Träger (35), vorzugsweise aus einem Stahlkeramiksubstrat, auf welchem in Dickschichttechnik ein Widerstandsnetzwerk (2) aufgebracht ist, bei welchem in Reihe geschaltete Widerstände (22 bis 27) jeweils von einer Leiterschleife (29 bis 34) überbrückt sind und die Leiterschleifen (29 bis 34) in Verschleißrichtung gestaffelt zueinander angeordnet sind. Von Bedeutung ist dabei, daß die Keramikschicht eine Stärke in einer Größenordnung < 100 µm aufweist.

## Beschreibung

Die Erfindung betrifft ein Sensorelement für einen mehrstufigen Verschleißgeber, insbesondere für Bremsbeläge gemäß dem Oberbegriff des Anspruchs 1, wobei das Sensorelement in Bremsen von Fahrzeugen, Kränen, Seilbahnen und Hebezeugen Anwendung finden kann.

An einen derartigen Geber, insbesondere aber an das eigentliche Sensorelement, das bei einer Kraftfahrzeugbremse in einem außerordentlich rauhen Milieu unmittelbar am oder im Bremsbelag verwendet wird und durch den Bremsvorgang Temperaturen bis zu 600^{o}C ausgesetzt ist, müssen hohe Anforderungen hinsichtlich einer zweifelsfreien Funktion gestellt werden. Diese Anforderungen an die Funktionssicherheit müssen heute weniger deshalb so exakt definiert sein, weil rechtzeitig vor unzulässigen Betriebszuständen eines Bremsensystems gewarnt werden soll oder durch rechtzeitige Signalgabe eine vorbeugende Wartung ausgelöst werden soll, sondern weil bei modernen Bremsensystemen durch Steuerung des Reibmomentes eine Optimierung des Verschleißverhaltens der Bremsen und somit eine Minimierung der Wartungstätigkeit bewirkt und eine Erhöhung der Fahrsicherheit durch Vermeidung von Überhitzungen der Bremsen erzielt werden soll. Dabei ist eine stufenweise, d.h. quasianaloge Verschleißerfassung einer rein analogen Verschleißerfassung deshalb vorzuziehen, weil damit der Einfluß der Herstelltoleranzen der Wandlerelemente sowie der durch den Temperaturgang zusätzlich erfolgenden Meßwertabweichung eliminiert werden kann, d.h. es ist bei ausreichender Stufung in jedem Falle feststellbar, welcher Verschleißgrad erreicht ist.

Ein solcher Verschleißgeber bzw. das Sensorelement des Gebers ist andererseits selbst ein Verschleißteil, das beim Bremsbelagwechsel neu anzubringen ist oder im Bremsbelag bzw. in dem Verbundteil aus Bremsbelag und dessen Träger von vornherein integriert ist. Das heißt, das Sensorelement sollte problemlos montierbar sein, was im letzteren Falle zweifellos gegeben ist, es sollte aber auch kostengünstig herstellbar sein.

Die Aufgabe der vorliegenden Erfindung bestand somit darin, ein Sensorelement zu schaffen, welches unter Großserienbedingungen gut reproduzierbar herstellbar ist, einen hohen Grad an Funktionssicherheit bietet und in seiner Geometrie mit vergleichsweise geringem Aufwand veränderbar oder neuen Einbaugegebenheiten anpaßbar ist.

Die Lösung der gestellten Aufgabe beschreibt der Patentanspruch 1. Bevorzugte Ausführungsvarianten stellen die Unteransprüche dar.

Der besondere Vorzug der Erfindung ist darin zu sehen, daß der Träger des sensierenden Widerstandsnetzwerkes, bezogen auf das einzelne Sensorelement, als relativ dünnes Plättchen ausgebildet sein kann, welches formstabil und in hohem Maße temperatur- und gegen aggressive Medien beständig ist. Ferner ist der Raumbedarf des Sensorelementes durch Verwendung der Dickschichtschaltungstechnik für das sensierende Widerstandsnetzwerk extrem gering, d.h. das Sensorelement läßt sich in geeigneter Weise in einem Montagegehäuse einbauen, in einem Spalt einspannen oder im Bremsbelag einbetten. Dabei können es die verschiedenen Einbausituationen erforderlich machen, daß die Konfiguration der Leiterschleifen und des Widerstandsnetzwerkes und die Geometrie des Sensorelementes variiert werden müssen, daß aber der Träger und die vorteilhafte großseriengerechte Fertigungstechnik beibehalten werden können. Entscheidend ist jedoch die Erkenntnis, daß ein solches Metallkeramiksubstrat, insbesondere ein Stahlkeramiksubstrat, bestehend aus einem relativ weichen, zähen und zunderfreien Chromstahl und einer zur Erzeugung der erforderlichen Dichtheit und Isolationsfähigkeit mit hoher Temperatur eingebrannten Keramikschicht von 40 bis 80 µm Schichtdicke gemeinsam mit einem Bremsbelag verschleißbar ist und dabei weder schmiert noch die reibende Bremstrommel oder Bremsscheibe beschädigt.

Durch die Verwendung eines zusätzlichen Widerstandes, der nicht durch eine Leiterschleife kurzgeschlossen ist, wird hinsichtlich des sensierenden Widerstandsnetzwerkes außerdem der Vorteil erzielt, daß der Verschleißgeber auf Kurzschluß oder Unterbrechung der Zuleitungen prüfbar bleibt, da bei der vorgesehenen Schaltung im normalen Betriebszustand weder der totale Kurzschluß noch infolge verschleißbedingter Durchtrennung der Leiterschleifen die totale Unterbrechung des Verschleißgebers vorkommen.

Bei geringer Stufenzahl in der Größenordnung von 15 Stufen kann infolge der erzielbaren Fertigungsgenauigkeit von ca. 5 % auf einen Laserabgleich der Widerstände des Widerstandsnetzwerkes verzichtet werden, d.h. eine Trennung der Leiterschleifen von der Widerstandsreihenschaltung und deren nachfolgenden Überbrückung mittels geeigneter Leiter ist dann nicht erforderlich.

In diesem Zusammenhang ist bedeutsam, daß unter der Voraussetzung, daß die Signalsprünge konstant sein sollen, ein Widerstandsnetzwerk vorgesehen ist, bei welchem die Werte der Widerstände von Stufe zu Stufe ansteigen und welches aus einer Spannungsquelle mit Vorwiderstand betrieben wird. Dadurch ist, im Gegensatz zu einem Widerstandsnetzwerk mit jeweils gleichen Widerständen und einer Beschaltung mit einer Stromquelle der Gesamtwiderstand des Verschleißgebers bei großer Stufenzahl hoch und der Einfluß der Toleranzen relativ gering, so daß mit einem aus einer Spannungsquelle betriebenen Widerstandsnetzwerk mit steigenden Widerstandswerten eine höhere Stufenzahl für einen Verschleißgeber wählbar ist.

Vorteilhaft ist ferner, daß die Sensorelemente im Nutzen herstellbar sind und daß jeweils für eine Vielzahl von Sensorelementen mehrere Fertigungsschritte maschinell durchgeführt werden und dadurch die geforderte Qualität garantiert ist. Die hohe Genauigkeit, mit der das Sensorelement durch die Anwendung der Dickschichttechnik herstellbar ist, macht, wenn diese Genauigkeit nutzbar sein soll, selbstverständlich auch eine entsprechende Einbaugenauigkeit und einen möglichst spannungsfreien Einbau des betreffenden Gebers erforderlich. Ferner sei noch erwähnt, daß aufgrund des vorgesehenen Stahlkeramikträgers für ein dem Geber zugeordnetes Temperaturmeßelement, beispielsweise ein ebenfalls in Dickschichttechnik aufgebrachter Platinwiderstand, eine gute thermische Ankopplung besteht, da der vorgesehene Stahlkeramikträger ein wirksamer Wärmeleiter darstellt. Dennoch kann es erforderlich sein, die gemessene Bremsbelagtemperaturen zu korrigieren, weil bei neuen Bremsbelägen die gemessenen Temperaturen ein niedrigeres Niveau haben als bei stark abgenutzten Bremsbelägen. Für eine derartige Korrektur kann die jeweils festgestellte Verschleißstufe herangezogen werden.

Im folgenden sei die Erfindung anhand der beigefügten Zeichnungen näher erläutert. Es zeigen:
Fig. 1 ein Blockschaltbild eines Sensorelementes und einer entfernt angeordneten Auswerteeinheit,
Fig. 2 ein Einbaubeispiel des in geeigneter Weise gekapselten Sensorelementes in der Bremsbacke einer Trommelbremse,
Fig. 3 ein Schaltungsbeispiel des Widerstandsnetzwerkes eines Sensorelementes gemäß Fig. 1,
Fig. 4 ein aus dem Nutzen ausgeschnittenes Sensorelement in Draufsicht, welches für einen Einbau in einem Gehäuse gemäß Fig. 2 vorgesehen ist,
Fig. 5 eine teilweise Seitenansicht des Sensorelementes gemaß Fig. 4 in überhöhter Darstellung,
Fig. 6 ein Ausführungsbeispiel des Sensorelementes, welches für ein Einbetten in einen Bremsbelag geeignet ist.

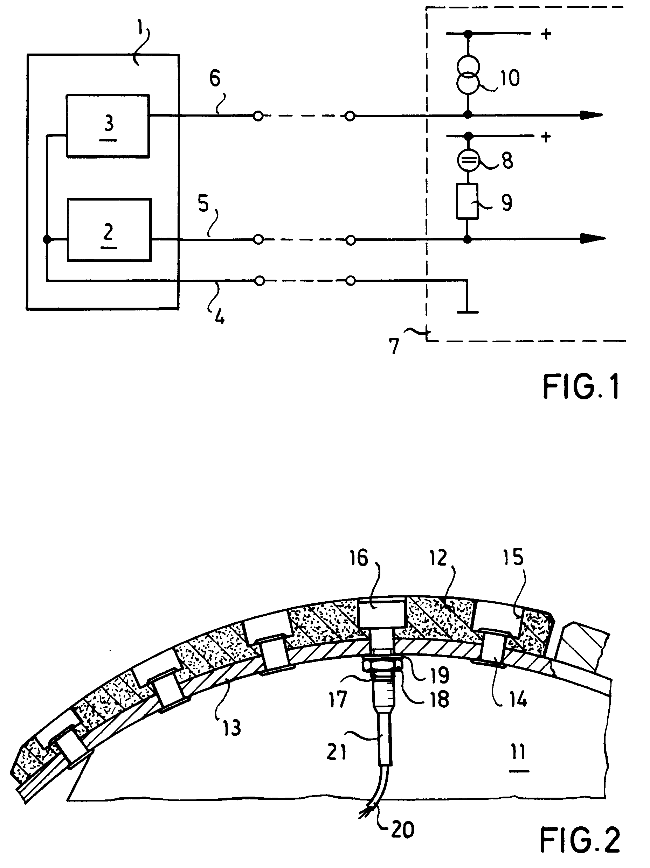

Die Fig. 1 zeigt ein Blockschaltbild eines Ausführungsbeispiels eines Verschleißgebers mit einem Sensorelement 1, welches ein den Verschleiß sensierendes Widerstandsnetzwerk 2 und ein die Temperatur der Reibfläche einer Bremse erfassendes Meßelement 3 umfaßt. Das Sensorelement 1 ist über eine Masseverbindung und zwei Signalleitungen 4, 5 und 6 mit einer Auswerteeinheit 7 verknüpft, aus welcher das Widerstandsnetzwerk 2 mittels einer Spannungsquelle 8 und einem Vorwiderstand 9, das Temperaturmeßelement 3 mittels einer Stromquelle 10 betrieben werden.

Das mit der Fig. 2 dargestellte Einbaubeispiel zeigt eine teilweise geschnittene Bremsbacke 11, beispielsweise einer Trommelbremse mit innenliegenden Bremsbacken. Mit 12 ist einer von wenigstens zwei auf einer Schulter 13 der Bremsbacke 11 befestigten Bremsbelägen bezeichnet. Die Befestigung der Bremsbeläge erfolgt üblicherweise mittels mehrerer Niete, von denen eine mit 14 bezeichnet ist, und denen im Bremsbelag 12 jeweils eine zylindrische Senkung 15 zugeordnet ist. Das Sensorelement 1 befindet sich in einem wengistens 2stufigen, hülsenförmigen Gehäuse 16, in welchem es mit einer temperaturfesten keramischen Vergußmasse oder zwei keramischen Formteilen mit annähernd den gleichen Verschleißeigenschaften wie das Bremsbelagmaterial befestigt ist. Das Gehäuse 16 ist seinerseits derart gestaltet, daß ein Gehäuseabschnitt größeren Durchmessers den Maßen der zylindrischen Senkung 15 entspricht und ein Gehäuseabschnitt kleineren Durchmessers, der mit einem Gewinde 17 versehen ist, gleich ist dem Durchmesser des Nietschaftes. Somit läßt sich das Gehäuse 16 in die Durchgangsbohrungen im Bremsbelag 12 und der Schulter 3 der Bremsbacke 11 einsetzen und mittels einer Mutter 18 und einer zwischengelegten Scheibe 19 zwischen dem Bremsbelag 12 und der Bremsbacke 1 festspannen. Als Variante ist es denkbar, beispielsweise den Gehäuseabschnitt größeren Durchmessers des Gehäuses 16 mit einem Rändel zu versehen, der gegenüber der Senkung 15 im Bremsbelag 12 ein Übermaß aufweist. Die Montage des Gehäuses 16 erfolgt dann durch Einpressen in die vorgesehene Nietöffnung, d.h. daß die Mittel zum Verschrauben des Gehäuses 16 entfallen können. Mit 20 ist ein die vorzugsweise teflonisolierten Leitungen zusammenfassender Kabelmantel bezeichnet; 21 stellt einen temperaturfesten Silikonschlauch dar.

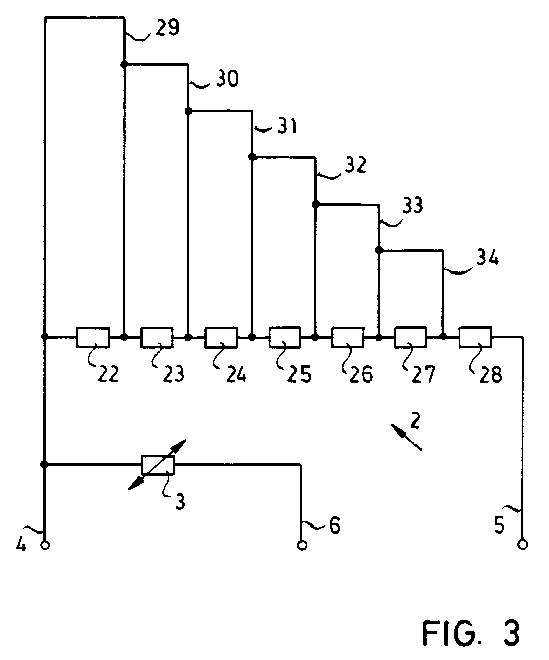

Aus der Fig. 3 ist ersichtlich, daß das Widerstandsnetzwerk 2 aus einer Reihenschaltung von Widerständen 22 bis 28 besteht und die Widerstände 22 bis 27 durch Leiterschleifen 29 bis 34 kurzgeschlossen sind. Die Leiterschleifen 29 bis 34 sind in Verschleißrichtung gestaffelt ausgebildet, so daß sie durch die Abnützung des zu sensierenden Bremsbelages nacheinander unterbrochen werden. Wie bereits in der Beschreibungseinleitung erwähnt, besteht das Widerstandsnetzwerk 2 unter der Voraussetzung gleicher Signalsprünge und einer Beschaltung mit einer Spannungsquelle und einem Vorwiderstand aus wertmäßig gestaffelten Widerständen. Dabei kann das System wie folgt bemessen sein: Bei einer konstanten Spannung von 5 V und einem Vorwiderstand von 1,5 kΩ können die Widerstandswerte der Widerstände 22 bis 28 286, 400, 600, 1000, 2800, 6000 und 214 Ω betragen.

Aus der Fig. 3 ist ferner eindeutig ersichtlich, daß es der nicht kurzgeschlossene Widerstand 28 ermöglicht, die Zuleitungen des Sensorelementes 1 prüfbar zu machen. Erwähnenswert ist ferner, daß bei den gewählten Widerstandswerten die Widerstände mit ein und derselben Widerstandspaste gedruckt werden können, d.h. daß alle Widerstände gleiches Temperaturverhalten zeigen. Es kann aber auch zweckmäßig sein, mehrere Widerstandspasten mit gegenläufigem Temperaturgang zu verwenden. Ein als Temperaturmeßelement 3 dienender Widerstand, beispielweise ein Platinwiderstand, kann entweder als fertig konfektionierter Widerstand auf die Dickschichtschaltung geklebt und dann mit den betreffenden Leiterbahnen kontaktiert werden oder er kann als Dickschichtwiderstand unter Verwendung einer geeigneten Widerstandspaste gedruckt werden.

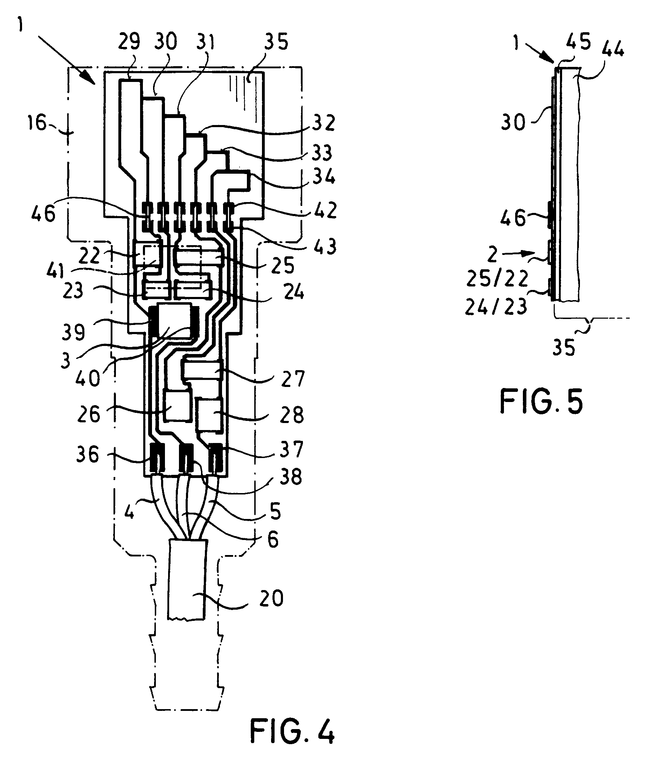

Die Draufsicht Fig. 4 zeigt ein Sensorelement 1, welches für einen Einbau gemäß Fig. 2 ausgebildet ist. In diesem Falle muß das Widerstandsnetzwerk 2 auf einer relativ schmalen Zunge des Trägers 35, die in den Schaft des Gehäuses 16 eingreift, untergebracht werden. Der Kontaktierung des Sensorelementes 1 mit den Leitungen 4, 5 und 6 dienen Kontakte 36, 37 und 38. Mit 39 und 40 sind Kontakte bezeichnet, die der Kontaktierung des Temperaturmeßelementes 3 dienen. Die strichpunktierte Fläche 41 soll die Klebestelle anzeigen für den Fall, daß der temperaturabhängige Widerstand 3 als fertig konfektionierter Widerstand auf die Dickschichtschaltung geklebt wird.

Wie ferner aus der Fig. 4 ersichtlich ist, sind an den Enden der Leiterschleifen 29 bis 34 und den zugehörigen Verbindungsstellen der Widerstandsreihenschaltung 22 bis 28 Kontakte ausgebildet. Ein Kontaktpaar ist mit 42, 43 bezeichnet. Auf diese Weise, d.h. durch die vorgesehenen Unterbrechungen, sind die Widerstände 22 bis 28, deren Widerstandswerte aufgrund des Mischungsverhältnisses der Widerstandspaste und ihrer unterschiedlichen Dimensionen relativ große Toleranzbreiten aufweisen, abgleichbar. Nach dem Abgleichen der Widerstände 22 bis 28 werden diese Leitungsunterbrechungen überbrückt unter Verwendung beispielsweise von anzuschweißenden Leitern oder aufzudruckender und nachträglich einzubrennender Leiterbahnpaste.

Die teilweise Seitenansicht Fig. 5 soll nochmals den Schichtaufbau des Sensorelementes 1 verdeutlichen. Auf dem als Träger 35 bezeichneten Stahlkeramiksubstrat, bestehend aus einer Stahlplatte 44 und einer Keramikschicht 45, sind die nicht näher bezeichneten Leiterbahnen zwischen den Widerständen 22 bis 28 die Kontakte 36, 37, 38 sowie 39, 40 und 42, 43 und die Leiterschleifen 29 bis 34 des Widerstandsnetzwerkes 2 siebdrucktechnisch aufgebracht und durch Einbrennen mit der Keramikschicht 45 verbunden. Nach dem Abgleich der in einem oder mehreren weiteren Fertigungsschritten ebenfalls mittels Siebdruck aufgebrachten Widerstände 22 bis 28 sowie 3 werden die Kontaktbrücken 46 zwischen den Kontakten 42, 43, wie bereits erläutert, hergestellt, die Leitungen 4, 5 und 6 angeschweißt und ein temperaturabhängiger Widerstand im Bereich 41 aufgeklebt und mit den Kontakten 39, 40 kontaktiert, falls ein entsprechender Widerstand 3 nicht bereits siebdrucktechnisch aufgebracht worden ist. Danach wird beispielsweise durch Tauchen des Sensors ein Kalisilikatüberzug aufgebracht.

Um für das Widerstandsnetzwerk 2 günstigere Platzverhältnisse zu schaffen, ist es denkbar, die Geometrie des Sensorelementes 1 zu ändern, die Schaltung sozusagen umzudrehen und ein entsprechendes, das Sensorelement 1 aufnehmendes Gehäuse außerhalb des Bremsbelages auf der Schulter 13 einer (Fig. 2) Bremsbacke 11 zu befestigen oder ein entsprechend gestaltetes Gehäuse in eine zusätzlich im Bremsbelag 12 und der Schulter 13 angebrachte Durchgangsbohrung einzuführen und in geeigneter Weise an der Rückseite der Schulter 13 zu befestigen.

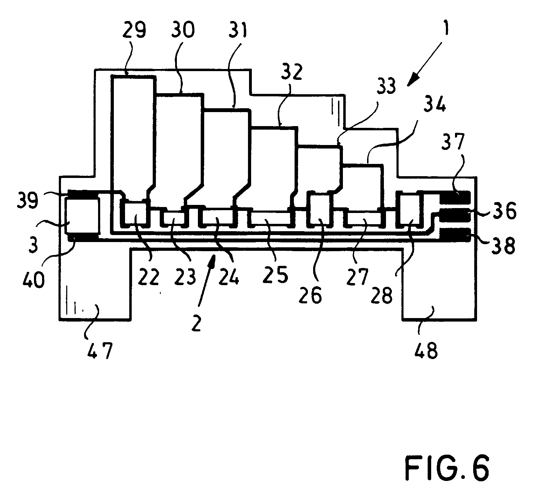

Mit der Fig. 6 ist ein Sensorelement 1 dargestellt, welches unmittelbar, d.h. ohne in ein Gehäuse eingebaut werden zu müssen, Anwendung finden kann, indem es bei der Herstellung eines Bremsbelages unmittelbar auf einem Strahlträger direkt in den Bremsbelag eingebettet wird. Mittels an dem Stahlkeramiksubstrat des Sensorelementes 1 ausgebildeter Zungen 47 und 48 wird das Sensorelement 1 vor dem Einbetten in den Bremsbelag in Schlitzen in dem Stahlträger in geeigneter Weise verankert. Das Widerstandsnetzwerk 2 ist in diesem Falle derart gestaltet, daß sich die Widerstände 22 bis 28 in einem schmalen Bereich unterhalb der maximalen Verschleißgrenze befinden und die Leitungen 4, 5, 6 parallel zur Verschleißebene aus dem Bremsbelag herausgeführt werden. Aus Platzgründen ist bei diesem Sensorelement auf eine Trennung von Leiterschleifen und Widerstandsreihenschaltung und somit auf die Möglichkeit des Abgleichens der Widerstände verzichtet worden.

Denkbar ist in diesem Zusammenhang auch eine Variante, bei der das Sensorelement als Winkelprofilteil hergestellt wird, wobei sich auf dem einen Schenkel die Leiterschleifen und auf dem anderen Schenkel die Widerstände befinden. Der die Widerstände tragende Schenkel des Sensorelementes kann unmittelbar auf den Stahlträger der Bremsbacke oder in einer Vertiefung des Stahlträgers, beispielsweise durch Kleben, befestigt werden. Dadurch ergibt sich eine besonders geringe Bauhöhe für das Sensorelement und somit eine besondere Eignung für relativ dünne Bremsbeläge. Andererseits ist die Sensierung des Bremsbelagverschleißes bis zur einer minimalen Belagstärke möglich.

## Patentansprüche

1. Sensorelement für einen mehrstufigen Verschleißgeber, insbesondere für Bremsbeläge mit einem verschleißbaren Träger, welcher im eingebauten Zustand des Sensorelementes gemeinsam mit dem Bremsbelag abgetragen wird und auf welchem ein Widerstandsnetzwerk mit Leiterschleifen derart angeordnet ist, daß die Leiterschleifen in Verschleißrichtung nacheinander unterbrechbar sind,
dadurch gekennzeichnet,
daß als Träger (35) ein Metallkeramiksubstrat, vorzugsweise ein Stahlkeramiksubstrat, vorgesehen ist,
daß die Keramikschicht (45) des Metallkeramiksubstrats eine Stärke in einer Größenordnung < 100 µm aufweist und
daß die Leiterschleifen (29 bis 34) und die Widerstände (22 bis 28) des sensierenden Widerstandsnetzwerkes (2) in Dickschichttechnik auf dem Metallkeramiksubstrat aufgebracht sind.

2. Sensorelement nach Anspruch 1,
dadurch gekennzeichnet,
daß das Widerstandsnetzwerk (2) durch eine Reihenschaltung von mehreren Widerständen (22 bis 27) gebildet ist, von denen jeder von einer Leiterschleife (29 bis 34) überbrückt ist und die Leiterschleifen (29 bis 34) in Verschleißrichtung zueinander gestaffelt angeordnet sind.

3. Sensorelement nach Anspruch 1,
dadurch gekennzeichnet,
daß die zur Überbrückung der Widerstände (22 bis 27) des Widerstandsnetzwerkes (2) vorgesehenen Leiterschleifen (29 bis 34) und die Widerstandsreihenschaltung voneinander elektrisch getrennt auf dem Metallkeramiksubstrat aufgebracht werden,
daß an den jeweiligen Enden der Leiterschleifen (29 bis 34) und den zugehörigen Verbindungsstellen der Reihenschaltung der Widerstände Kontakte (42, 43) ausgebildet sind und daß nach dem Abgleich der Widerstände (22 bis 28) die Leitungsunterbrechungen überbrückt werden.

4. Sensorelement nach Anspruch 2,
dadurch gekennzeichnet,
daß den in Reihe geschalteten die Verschleißstufen kennzeichnenden Widerständen (22 bis 27) ein als Temperaturmeßelement (3) dienender temperaturabhängiger Widerstand zugeordnet ist.

5. Sensorelement nach Anspruch 4,
dadurch gekennzeichnet,
daß der temperaturabhängige Widerstand als Dickschichtwiderstand gedruckt ist.

6. Sensorelement nach Anspruch 1,
dadurch gekennzeichnet,
daß seine Herstellung im Nutzen erfolgt und die nachfolgende Vereinzelung durch Ausschneiden mittels eines Lasertrennverfahrens aus der in geeigneter Weise vorgeprägten Metallkeramiksubstratplatte vorgenommen wird.

7. Sensorelement nach Anspruch 6,
dadurch gekennzeichnet,
daß nach dem Kontaktieren der Drähte der Massen und Signalleitungen (4, 5, 6) ein Kalisilikatüberzug aufgebracht wird.

8. Sensorelement für einen mehrstufigen Verschleißgeber, insbesondere für Bremsbeläge mit einem verschleißbaren Träger, welcher im eingebauten Zustand des Sensorelementes gemeinsam mit dem Bremsbelag abgetragen wird und auf welchem ein Widerstandsnetzwerk mit Leiterschleifen derart angeordnet ist, daß die Leiterschleifen in Verschleißrichtung nacheinander unterbrechbar sind,
dadurch gekennzeichnet,
daß die Widerstandswerte der in Reihe geschalteten Widerstände (22 bis 27) des Widerstandsnetzwerkes (2) derart gestuft sind, daß sie mit zunehmendem Verschleiß ansteigen und daß das Widerstandsnetzwerk (2) an einer Spannungsquelle (8) angeschlossen ist und über einen Vorwiderstand (9) betrieben wird.

9. Sensorelement nach Anspruch 8,
dadurch gekennzeichnet,
daß den in Reihe geschalteten Widerständen (22 bis 27) ein weiterer Widerstand (28) zugeordnet ist, der nicht von einer Leiterschleife überbrückt ist.
